# EUROPEAN PATENT APPLICATION

(11) **EP 4 742 088 A1**
(43) Date of publication of application: **13.05.2026**
(21) Application number: 24868807.9
(22) Date of filing: 20.09.2024
(51) Int. Cl.: G06K 7/10, G06K 7/14, H01M 10/04, G05B 19/418

(54) **CODE READER AND CODE READING METHOD USING SAME**

(30) Priority: 21.09.2023 KR 20230126166
(71) Applicant: LG Energy Solution, Ltd., Seoul 07335 (KR)
(72) Inventor: KIM, Jeong Jin, Daejeon 34122 (KR); PARK, Kyoung Chan, Daejeon 34122 (KR); PARK, Yeong Heon, Daejeon 34122 (KR); LEE, Hee Won, Daejeon 34122 (KR); HAN, Hyung Wook, Daejeon 34122 (KR); LEE, Seok Hun, Daejeon 34122 (KR); JANG, Seong Won, Daejeon 34122 (KR); KIM, Min Su, Daejeon 34122 (KR); JUNG, Tae Kwang, Daejeon 34122 (KR)
(74) Representative: BCKIP Part mbB
(86) International application number: PCT/KR2024/096216
(87) International publication number: WO 2025/063834

(57) **Abstract**

The present technology provides a code reader including a vision device configured to identify an identification code of an article, a lower frame located below the vision device and configured to provide a passage through which the article is moved, an alignment jig detachably mounted in the lower frame and accommodated in the passage of the lower frame, and a fixing holder at a reference position, in which the vision device is aligned to the reference position by inserting the alignment jig into the fixing holder.

## Description

### [Technical Field]

The present invention relates to a code reader and a code reading method using the same.

This application claims the benefit of priority based on Korean Patent Application No. 10-2023-0126166, filed on September 21, 2023, and the entire content of the Korean patent application is incorporated herein by reference.

### [Background Art]

Secondary batteries are rechargeable unlike primary batteries and can be manufactured to have a small size and a large capacity and therefore have recently been researched and developed many times. With the development of technologies for electric vehicles, mobile devices, etc. and an increasing demand therefor, the demand for secondary batteries as energy sources is sharply increasing.

Secondary battery production processes may be carried out by various types of equipment, such as a notching equipment for performing a notching process, a laminating equipment for performing a laminating process, a stacking equipment for performing a stacking process, and a packaging equipment for performing a packaging process. When a problem occurs in a battery cell of a secondary battery, each of battery cells of the secondary battery should be individually managed in each of the secondary battery production processes to specify the cause of the problem. Therefore, there is a need for a method of uniquely specifying each of the battery cells of the secondary battery in the secondary battery production processes and effectively identifying the battery cells of the secondary battery in each process.

### [Disclosure]

### [Technical Problem]

The present invention is directed to providing a code reader and a code reading method using the same.

### [Technical Solution]

An aspect of the present invention provides a code reader including a vision device configured to identify an identification code of an article, a lower frame located below the vision device and configured to provide a passage through which the article is moved, an alignment jig detachably mounted in the lower frame and accommodated in the passage of the lower frame, and a fixing holder at a reference position, in which the vision device is aligned to the reference position by inserting the alignment jig into the fixing holder.

In example embodiments, the passage of the lower frame may extend horizontally across the lower frame.

In example embodiments, the alignment jig may include a fastening blade extending along the passage of the lower frame and detachably fastened to the lower frame, and an alignment pillar connected to a central part of the fastening blade and configured to be inserted into the fixing holder.

In example embodiments, the alignment pillar may protrude downward from the lower frame.

In example embodiments, a first end portion and a second end portion of the fastening blade, which are opposite to each other, may be fastened to the lower frame by bolts.

In example embodiments, the first end portion and the second end portion of the fastening blade may be exposed to the outside of the lower frame.

In example embodiments, the code reader may further include an upper frame configured to accommodate the vision device and provided on the lower frame, and the lower frame may include an upper cover plate connected to the upper frame, a lower cover plate facing the upper cover plate and having an opening for communication with the passage of the lower frame, and a side plate extending from an edge of the upper cover plate to an edge of the lower cover plate.

In example embodiments, the fastening blade may be detachably fastened to the upper cover plate.

In example embodiments, the upper frame may be mounted on a vertical movement guide to be movable in a vertical direction.

In example embodiments, the lower frame and the alignment jig may be moved together with the upper frame in the vertical direction when the upper frame is moved in the vertical direction.

In example embodiments, the article may be a can in which battery cells are accommodated.

An aspect of the present invention provides a code reading method including mounting an alignment jig in a passage of a lower frame provided below a vision device, aligning the vision device to a reference position by inserting the alignment jig into a fixing holder at the reference position, separating the alignment jig from the lower frame, putting an article with an identification code into the passage of the lower frame, and identifying the identification code of the article by the vision device.

In example embodiments, the article may be a can in which battery cells are accommodated.

In example embodiments, the passage of the lower frame may extend horizontally across the lower frame, and the alignment jig may include a fastening blade extending along the passage of the lower frame and detachably fastened to the lower frame and an alignment pillar connected to a central part of the fastening blade and configured to be inserted into the fixing holder.

In example embodiments, an upper frame accommodates the vision device and is provided on the lower frame, the upper frame being configured to accommodate the vision device, the lower frame may include an upper cover plate connected to the upper frame, a lower cover plate facing the upper cover plate and having an opening for communication with the passage of the lower frame, and a side plate extending from an edge of the upper cover plate to an edge of the lower cover plate, and the fastening blade may be detachably fastened to the upper cover plate.

### [Advantageous Effects]

According to example embodiments of the present invention, a vision device may be aligned using an alignment jig. Accordingly, a time required to align the vision device can be reduced, and a recognition rate and accuracy of code reading can be improved by increasing a position alignment degree of the vision device.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIGS. 1 and 2 are side views of a code reader according to example embodiments of the present invention for describing a process of aligning a vision device to a reference position.
FIG. 3 is a perspective view of a part of the code reader of FIG. 1.
FIG. 4 is a bottom view of a lower frame and an alignment jig of the code reader of FIG. 1.
FIG. 5 is a perspective view of the alignment jig of the code reader of FIG. 1.
FIG. 6 is a flowchart of a code reading method according to example embodiments of the present invention.
FIG. 7 is a side view schematically illustrating a code reading method according to example embodiments of the present invention.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

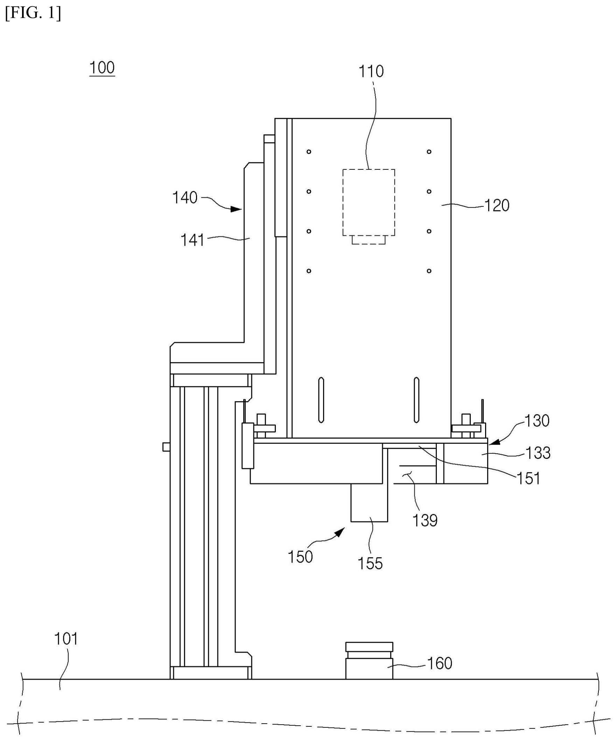

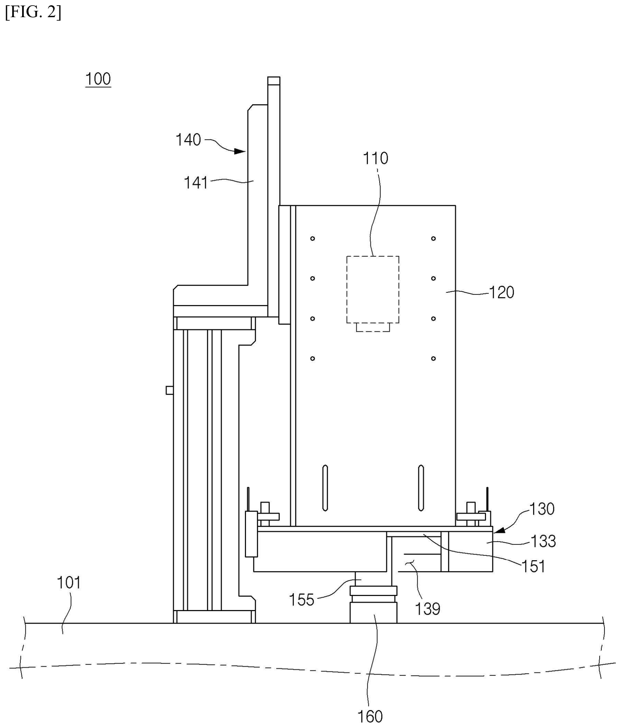

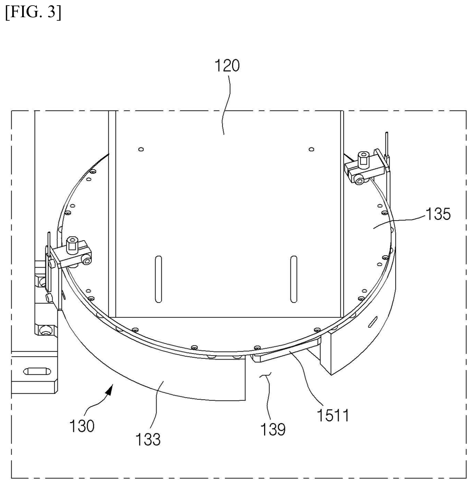

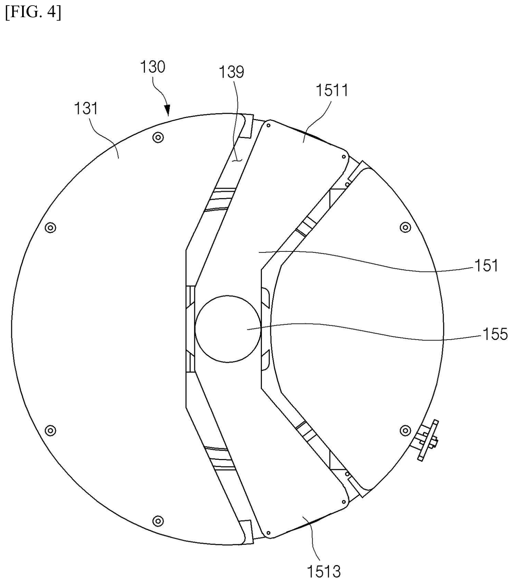

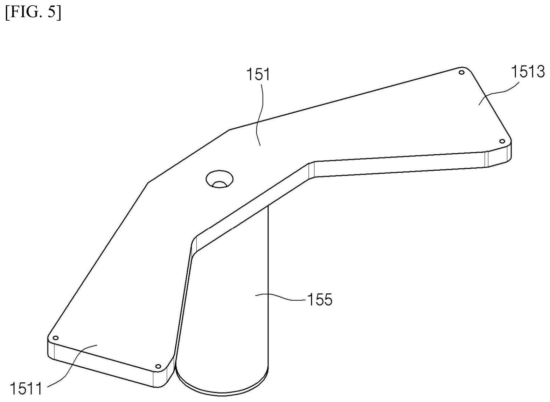

FIGS. 1 to 5 are diagrams illustrating a code reader 100 according to example embodiments of the present invention. FIGS. 1 and 2 are side views illustrating a process of aligning a vision device 110 of the code reader 100 to a reference position. FIG. 3 is a perspective view of a part of the code reader 100. FIG. 4 is a bottom view of a lower frame 130 and an alignment jig 150 of the code reader 100. FIG. 5 is a perspective view of the alignment jig 150 of the code reader 100.

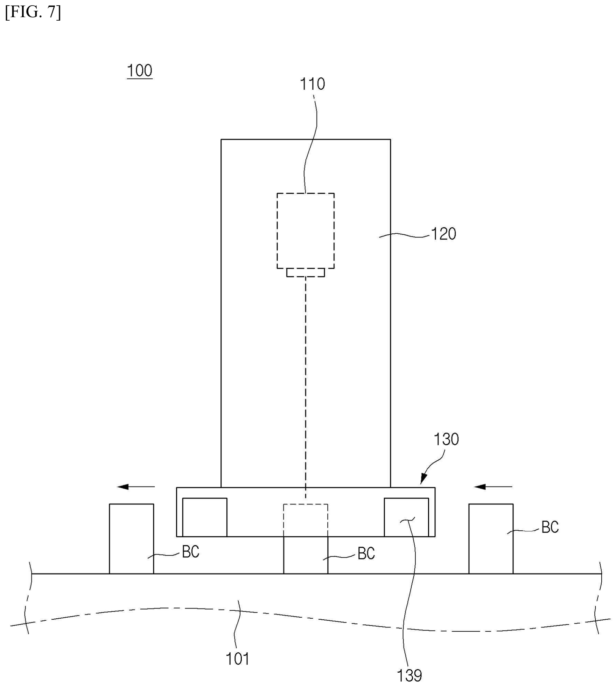

Referring to FIGS. 1 to 5, the code reader 100 may be configured to read an identification code of an article BC of FIG. 7. The article BC may be a battery can or a battery cell in which a battery cell is accommodated. In example embodiments, the article BC may be a cylindrical battery can in which a battery cell is accommodated. The identification code may include information about the article BC. The identification code may be a mark formed on an outer surface of the article BC by a laser marking process. The identification code may include a one-dimensional code and/or a two-dimensional code. In embodiments, the identification code may include a quick-response (QR) code. The code reader 100 may identify and read the identification code of the article BC. The code reader 100 may provide information obtained by reading the identification code to a cell management system. Based on the information provided from the code reader 100, a production process of the article BC may be monitored.

The code reader 100 may include the vision device 110, an upper frame 120, the lower frame 130, and an actuator 140.

The vision device 110 may identify the identification code of the article BC on a stage 101. The vision device 110 may include an image sensor, a camera, or a combination thereof.

The upper frame 120 may accommodate the vision device 110. The vision device 110 may be installed in the upper frame 120. The lower frame 130 may be coupled to a lower end of the upper frame 120. The lower frame 130 may be located under the vision device 110. The lower frame 130 may provide an optical path extending in a vertical direction, and the vision device 110 may photograph the identification code of the article BC on the stage 101 through the optical path of the lower frame 130.

The lower frame 130 may have a roughly disk shape and include a passage 139 through which the article BC is moved in a horizontal direction. The passage 139 of the lower frame 130 may extend in the horizontal direction from one side of the lower frame 130 to another side thereof while passing through the lower frame 130 in the horizontal direction. While the article BC is passed through the passage 139, the vision device 110 may photograph the article BC.

The lower frame 130 may include an upper cover plate 135 connected to a lower part of the upper frame 120, a lower cover plate 131 facing the upper cover plate 135, and a side plate 133 extending from an edge of the upper cover plate 135 to an edge of the lower cover plate 131. The passage 139 of the lower frame 130 may communicate with a first opening and a second opening in the side plate 133 and extend from the first opening to the second opening. The passage 139 of the lower frame 130 may be exposed to the outside of the lower frame 130 through the first and second openings in the side plate 133. The first opening in the side plate 133 may be an entrance of the passage 139 through which the article BC is brought in, and the second opening in the side plate 133 may be an exit of the passage 139 through which the article BC is brought out. The passage 139 of the lower frame 130 may also communicate with an opening in the lower cover plate 131. The passage 139 of the lower frame 130 may be exposed to the outside of the lower frame 130 through the opening in the lower cover plate 131.

The actuator 140 may move the upper frame 120, the vision device 110, and the lower frame 130 in the vertical direction. The actuator 140 may include a linear actuator 140. The upper frame 120 may be mounted on a vertical movement guide 141 of the actuator 140 to be movable in the vertical direction. When the upper frame 120 is moved in the vertical direction by the actuator 140, the vision device 110 and the lower frame 130 fixed to the upper frame 120 may be moved in the vertical direction, together with the upper frame 120.

The code reader 100 may include the alignment jig 150 and a fixing holder 160 to be used in an alignment operation for aligning the vision device 110 to a reference position.

The alignment jig 150 may be detachably mounted on the lower frame 130. For example, the alignment jig 150 may be fastened to the lower frame 130 through a bolt. The alignment jig 150 may be fastened to the lower frame 130 to be accommodated or inserted into the passage 139 of the lower frame 130. When the alignment jig 150 is fastened to the lower frame 130, the alignment jig 150 may be exposed to the outside of the lower frame 130 through the first and second openings in the side plate 133 of the lower frame 130. In addition, when the alignment jig 150 is fastened to the lower frame 130, the alignment jig 150 may be exposed to the outside of the lower frame 130 through the opening in the lower cover plate 131 of the lower frame 130. When the alignment jig 150 is fastened to the lower frame 130, the alignment jig 150 may be moved in the vertical direction together with the lower frame 130 during the movement of the lower frame 130 in the vertical direction.

The alignment jig 150 may include a fastening blade 151 fastened to the lower frame 130 and an alignment pillar 155 connected to the fastening blade 151.

The fastening blade 151 may extend along the passage 139 of the lower frame 130 from one side of the passage 139 of the lower frame 130 to another side thereof. A thickness of the fastening blade 151 may be generally uniform. When viewed in a plan view, the fastening blade 151 may have a bent shape corresponding to a bent shape of the passage 139 of the lower frame 130. The fastening blade 151 may be exposed to the outside of the lower frame 130 through the first and second openings in the lower frame 130.

The fastening blade 151 may have a first end portion 1511 and a second end portion 1513 that are opposite to each other. The first end portion 1511 and the second end portion 1513 of the fastening blade 151 may be exposed to the outside of the lower frame 130 through a first opening and a second opening in side walls of the lower frame 130, respectively. The first end portion 1511 and the second end portion 1513 of the fastening blade 151 may be detachably fastened to the lower frame 130. For example, the first end portion 1511 and the second end portion 1513 of the fastening blade 151 may be fastened to the upper cover plate 135 of the lower frame 130 by bolts. By fastening the first end portion 1511 and the second end portion 1513 of the fastening blade 151 to the lower frame 130, the fastening blade 151 may be closely fixed to a bottom surface of the upper cover plate 135 of the lower frame 130.

The alignment pillar 155 may be connected to a central part of the fastening blade 151 between the first and second end portions 1511 and 1513 of the fastening blade 151. The alignment pillar 155 may have a cylindrical or polygonal pillar shape extending in the vertical direction. When the alignment jig 150 is mounted on the lower frame 130, a part of the alignment jig 150 may protrude downward from the lower frame 130.

The fixing holder 160 may be provided on the stage 101 and fixed at a predetermined reference position. The reference position is a position suitable to recognize the identification code of the article BC in the lower frame 130 by the vision device 110. The fixing holder 160 may include an insertion groove into which the alignment pillar 155 is inserted. By inserting the alignment pillar 155 into the insertion groove in the fixing holder 160, the vision device 110 may be aligned to the reference position. A position of the lower frame 130 and/or a position of the upper frame 120 may be adjusted to insert the alignment pillar 155 into the insertion groove in the fixing holder 160, and the vision device 110 may be automatically aligned to the reference position when the insertion of the alignment pillar 155 into the insertion groove of the fixing holder 160 is completed.

### (Second Embodiment)

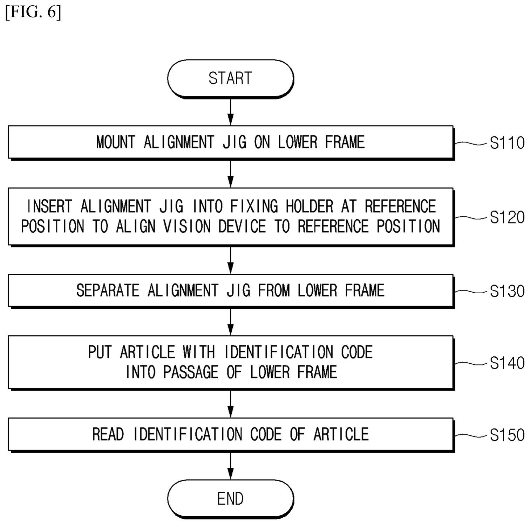

FIG. 6 is a flowchart of a code reading method according to example embodiments of the present invention. FIG. 7 is a side view schematically illustrating a code reading method according to example embodiments of the present invention. A code reading method using the code reader 100 will be described with reference to FIGS. 1 to 7 below.

Referring to FIG. 1, the alignment jig 150 is mounted on the lower frame 130 of the code reader 100 (S110). In operation S110, the first end portion 1511 and the second end portion 1513 of the fastening blade 151 of the alignment jig 150 may be fastened to the upper cover plate 135 of the lower frame 130 by bolts.

Referring to FIG. 2, after the mounting of the alignment jig 150 on the lower frame 130 of the code reader 100, the alignment pillar 155 of the alignment jig 150 is inserted into the fixing holder 160 at a reference position to align the vision device 110 to the reference position (S120). In operation S120, the actuator 140 may move the lower frame 130 and the alignment jig 150 downward toward the fixing holder 160 on the stage 101. When the alignment pillar 155 of the alignment jig 150 is inserted into the insertion groove in the fixing holder 160, the position of the vision device 110 may be automatically aligned to the reference position.

After the vision device 110 is aligned to the reference position, the alignment jig 150 is separated from the lower frame 130 (S130). The bolts may be separated from the first and second end portions 1511 and 1513 of the fastening blade 151 to unfasten the first and second end portions 1511 and 1513 of the fastening blade 151 from the lower frame 130.

Referring to FIG. 7, after the alignment jig 150 is separated and removed from the lower frame 130, an article BC with an identification code is put into the passage 139 of the lower frame 130 (S140). Thereafter, the identification code of the article BC put into the passage 139 of the lower frame 130 is read by the vision device 110 (S150).

According to a comparative example, the vision device 110 may be aligned to the reference position manually by an operator. In this case, when the position of the vision device 110 is manually aligned, the position of the vision device 110 may change in each operation, and a position alignment degree of the vision device 110 may depend on an operator.

According to example embodiments of the present invention, the vision device 110 may be aligned by the alignment jig 150. Accordingly, a time required to align the vision device 110 can be reduced, and a recognition rate and accuracy of code reading can be improved by increasing the position alignment degree of the vision device 110.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A code reader comprising:
a vision device configured to identify an identification code of an article;
a lower frame provided below the vision device and configured to provide a passage through which the article is moved;
an alignment jig detachably mounted in the lower frame and accommodated in the passage of the lower frame; and
a fixing holder at a reference position,
wherein the vision device is aligned to the reference position by inserting the alignment jig into the fixing holder.

2. The code reader of claim 1, wherein
the passage of the lower frame extends horizontally across the lower frame.

3. The code reader of claim 1, wherein
the alignment jig comprises:
a fastening blade extending along the passage of the lower frame and detachably fastened to the lower frame; and
an alignment pillar connected to a central part of the fastening blade and configured to be inserted into the fixing holder.

4. The code reader of claim 3, wherein
the alignment pillar protrudes downward from the lower frame.

5. The code reader of claim 3, wherein
a first end portion and a second end portion of the fastening blade, which are opposite to each other, are fastened to the lower frame by bolts.

6. The code reader of claim 5, wherein
the first end portion and the second end portion of the fastening blade are exposed to the outside of the lower frame.

7. The code reader of claim 3, further comprising
an upper frame configured to accommodate the vision device and provided on the lower frame,
wherein the lower frame comprises:
an upper cover plate connected to the upper frame;
a lower cover plate facing the upper cover plate and having an opening for communication with the passage of the lower frame; and
a side plate extending from an edge of the upper cover plate to an edge of the lower cover plate.

8. The code reader of claim 7, wherein
the fastening blade is detachably fastened to the upper cover plate.

9. The code reader of claim 7, wherein
the upper frame is mounted on a vertical movement guide to be movable in a vertical direction.

10. The code reader of claim 9, wherein
the lower frame and the alignment jig are moved together with the upper frame in the vertical direction when the upper frame is moved in the vertical direction.

11. The code reader of claim 1, wherein
the article is a can in which battery cells are accommodated.

12. A code reading method comprising:
mounting an alignment jig in a passage of a lower frame provided below a vision device;
aligning the vision device to a reference position by inserting the alignment jig into a fixing holder at the reference position;
separating the alignment jig from the lower frame;
putting an article with an identification code into the passage of the lower frame; and
identifying the identification code of the article by the vision device.

13. The code reading method of claim 12, wherein
the article is a can in which battery cells are accommodated.

14. The code reading method of claim 12, wherein
the passage of the lower frame extends horizontally across the lower frame, and
the alignment jig comprises:
a fastening blade extending along the passage of the lower frame and detachably fastened to the lower frame; and
an alignment pillar connected to a central part of the fastening blade and configured to be inserted into the fixing holder.

15. The code reading method of claim 14, wherein
an upper frame accommodates the vision device and is provided on the lower frame,
wherein the lower frame comprises:
an upper cover plate connected to the upper frame;
a lower cover plate facing the upper cover plate and having an opening for communication with the passage of the lower frame; and
a side plate extending from an edge of the upper cover plate to an edge of the lower cover plate, and
the fastening blade is detachably fastened to the upper cover plate.
